# EUROPEAN PATENT APPLICATION

(11) **EP 4 722 049 A1**
(43) Date of publication of application: **08.04.2026**
(21) Application number: 25194375.9
(22) Date of filing: 06.08.2025
(51) Int. Cl.: B60R 25/20, B60R 25/24

(54) **IN-VEHICLE DEVICE, METHOD, AND PROGRAM**

(30) Priority: 03.10.2024 JP 2024174211
(71) Applicant: TOYOTA JIDOSHA KABUSHIKI KAISHA, Toyota-shi, Aichi-ken 471-8571 (JP)
(72) Inventor: TAKADA, Naoyuki, Toyota-shi, 471-8571 (JP)
(74) Representative: J A Kemp LLP

(57) **Abstract**

An execution device acquires contract information indicating whether there is a valid contract allowing the digital key to be used exists. On condition that the acquired contract information indicates that the valid contract does not exist, the execution device displays on a first display device information indicating that information related to the digital key is stored in a storage device.

## Description

### CROSS-REFERENCE TO RELATED APPLICATIONS

This application is based upon and claims the benefit of priority from Japanese Patent Application No. 2024-174211, filed on October 3, 2024, the entire contents of which are incorporated herein by reference.

### BACKGROUND

### 1. Field

The following description relates to an in-vehicle device, a method, and a program.

### 2. Description of Related Art

JP2024-001797A discloses a digital key system. The digital key system includes an in-vehicle device, which is installed in a vehicle, and a mobile device. The in-vehicle device stores information related to the mobile device so that the mobile device can be used as a digital key.

In a digital key system, such as that described in the above patent literature, a user may need to sign a contract to receive permission to use the digital key. In this case, however, when the user cancels the contract, the user may not realize that the information related to the usable digital key may be left stored in the in-vehicle device.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an in-vehicle device includes a storage device and processing circuitry. The storage device stores information related to a digital key of a vehicle. The processing circuitry is configured to execute display control including acquiring contract information from outside the vehicle, in which the contract information indicates whether there is a valid contract allowing the digital key to be used, and if the acquired contract information indicates that the valid contract does not exist, displaying, on a display portion of the vehicle, information indicating that the information related to the digital key is stored in the storage device.

In another general aspect, a method is executed by an in-vehicle device that stores information related to a digital key of a vehicle. The method includes acquiring, with the in-vehicle device, contract information indicating whether a valid contract allowing the digital key to be used exists from outside the vehicle, and if the acquired contract information indicates that the valid contract does not exist, displaying information on a display portion of the vehicle to indicate that the information related to the digital key is stored in the in-vehicle device.

In a further general aspect, a program is executed by an in-vehicle device storing information related to a digital key of a vehicle. When the program is executed by the in-vehicle device, the program causes the in-vehicle device to perform operations including acquiring contract information, from outside the vehicle, indicating whether there is a valid contract allowing the digital key to be used, and displaying, if the acquired contract information indicates that the valid contract does not exist, information on a display portion of the vehicle indicating that the information related to the digital key is stored in the in-vehicle device.

Other features and aspects will be apparent from the following detailed description, the drawings, and the claims.

### BRIEF DESCRIPTION OF THE DRAWINGS

Fig. 1 is a schematic diagram illustrating a control system in accordance with an embodiment.
Fig. 2 is a diagram illustrating a sequence of deleting processes performed by a management system in accordance with the embodiment.
Fig. 3 is a flowchart illustrating a display control process executed by a digital key ECU of the embodiment.
Fig. 4 is a diagram illustrating a warning image.
Fig. 5 is a diagram illustrating a setting image of a first mode in accordance with the embodiment.
Fig. 6 is a diagram illustrating a setting image of a second mode in accordance with the embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

An embodiment of an in-vehicle device will now be described with reference to the drawings. A management system 10 will now be described.

### Overview of Management System

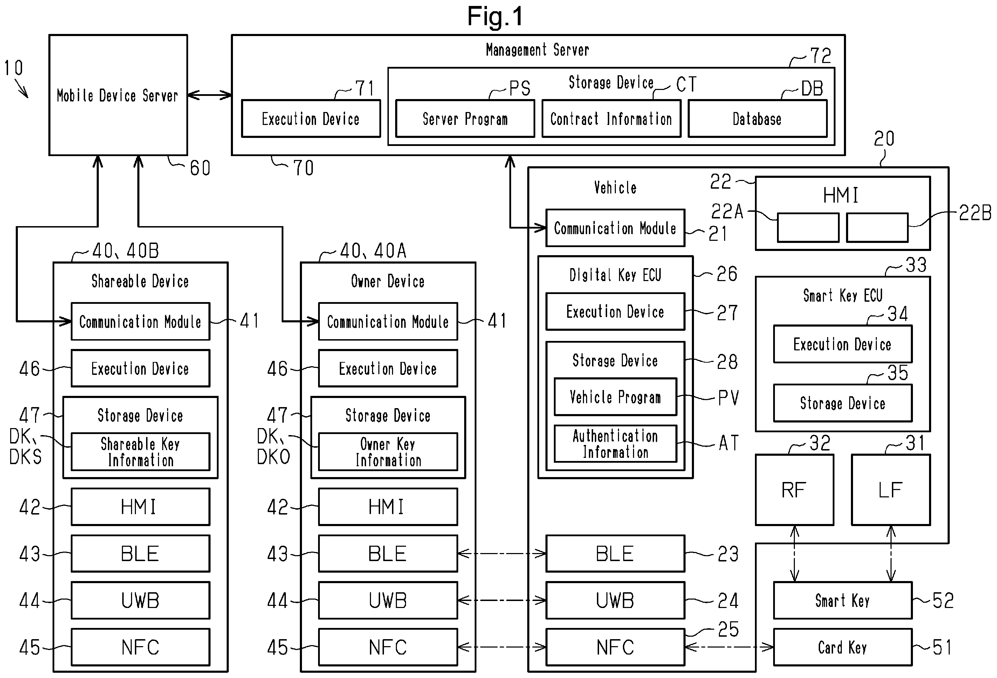

As shown in Fig. 1, the management system 10 manages usable digital keys for a vehicle 20. Car Connectivity Consortium (CCC) has developed a standard for digital keys. The digital keys of the present embodiment comply with the CCC standard but may be applied to standards and systems other than those of the CCC.

The management system 10 includes a vehicle 20, mobile devices 40, a card key 51, a proximity key 52 (e.g. a Smart Key^{®}), a mobile device server 60, and a management server 70. The mobile devices 40 are used as the digital keys.

The vehicle 20 includes a communication module 21, a human machine interfaces (HMI) 22, a BLE module 23 (e.g. a low energy wireless module such as a Bluetooth^{®} low energy (BLE) module'), an ultra-wideband (UWB) module 24, a near field communication (NFC) module 25, and a digital key ECU 26, which acts as an in-vehicle device.

The communication module 21 communicates with the management server 70 via a wireless communication network. The HMI 22 includes input portions such as a switch and a touchscreen that accepts operations of a user of the vehicle. The HMI 22 includes a first display device 22A and a second display device 22B, which are display portions that provide information to the user through displayed images. The HMI 22 includes a speaker which is a sound emitting portion that provides information through voice.

The first display device 22A is a meter display. The meter display is located in front of a steering wheel and the driver seat. The second display device 22B is a center display. The center display is located between the driver seat and the passenger seat.

The BLE module 23 performs BLE communication which is a type of short-range communication, with the mobile devices 40. The UWB module 24 performs UWB communication with the mobile devices 40. The UWB module 24 measures the distance between the mobile devices 40 and the vehicle 20.

The NFC module 25 performs NFC communication which is a type of short-range communication, with the mobile devices 40. Further, the NFC module 25 performs NFC communication, which is a type of short-range communication with the card key 51.

The digital key ECU 26 is installed in the vehicle 20. The digital key ECU 26 manages the digital keys of the vehicle 20. The digital key ECU 26 includes an execution device 27 and a storage device 28. The storage device 28 stores authentication information AT, which is information related to the digital keys. The authentication information AT is used to authenticate a digital key so that the digital key can be used to control the vehicle 20. The authentication information AT is provided for each authenticated digital key.

When a digital key is authenticated, the digital key can be used to control the vehicle 20. For example, when the digital key ECU 26 authenticates a digital key, the digital key ECU 26 permits unlocking of the vehicle 20 with the digital key. Additionally, for example, when the digital key ECU 26 authenticates the digital key, the digital key ECU 26 permits activation of the vehicle 20 with the digital key.

The storage device 28 stores various programs for processing the digital keys. The execution device 27 is a CPU. The execution device 27 executes the programs to perform digital key processing.

The storage device 28 stores a vehicle program PV. When executed by the execution device 27, the vehicle program PV has the execution device 27 perform display control to indicate that the storage device 28 is in a state storing the authentication information AT. The execution device 27 executes the vehicle program PV to perform display control and indicate that the storage device 28 is in a state storing the authentication information AT.

Further, the storage device 28 stores various programs for processing the card key 51. The execution device 27 executes the programs to process the card key 51.

When, for example, the card key 51 is held in the vicinity of an antenna arranged in an outer portion of the NFC module 25 and the NFC module 25 establishes communication with the card key 51, the execution device 27 determines that the card key 51 has been authenticated. Thus, the execution device 27 permits unlocking of the doors of the vehicle 20.

Additionally, for example, when the card key 51 is placed in the vicinity of an antenna of the NFC module 25, which is arranged near the driver seat, and the NFC module 25 establishes communication with the card key 51, the execution device 27 determines that the card key 51 has been authenticated. Thus, the execution device 27 permits activation of the vehicle 20.

The vehicle 20 includes a low frequency (LF) module 31, a radio frequency (RF) module 32, and a proximity key ECU 33 (e.g. Smart Key^{®} ECU).

The LF module 31 performs wireless communication with the proximity key 52 through LF signals. The RF module 32 performs wireless communication with the proximity key 52 through RF signals.

The proximity key ECU 33 controls the proximity key 52 of the vehicle 20. The proximity key ECU 33 includes an execution device 34 and a storage device 35. The storage device 35 stores various programs for the proximity key 52. The execution device 34 executes the programs stored in the storage device 35 to perform a process for authenticating the proximity key 52.

When, for example, an outer handle of the vehicle 20 is operated, the execution device 34 transmits the LF signal from the LF module 31 to the proximity key 52. Upon receipt of the LF signal, the proximity key 52 sends the RF signal including an authentication signal, set for the proximity key 52, to the RF module 32. Then, based on the authentication signal included in the RF signal received from the proximity key 52 by the RF module 32, the proximity key ECU 33 authenticates the proximity key 52. When the authentication signal received by the proximity key ECU 33 matches a predetermined authentication signal, the proximity key ECU 33 authenticates the proximity key 52. Subsequently, for example, the proximity key ECU 33 permits unlocking of the doors of the vehicle 20 or activation of the vehicle 20.

Each mobile device 40 is a mobile device such as a smartphone. The mobile device 40 includes a communication module 41, an HMI device 42, a BLE module 43, a UWB module 44, an NFC module 45, an execution device 46, and a storage device 47.

The communication module 41 communicates with the mobile device server 60 via a wireless communication network. The HMI device 42 includes an input device that accepts operations of the user and a presentation device for presenting information to the user through images, voice and/or the like. The presentation device is, for example, a monitor or a speaker.

The BLE module 43 performs BLE communication, which is a type of short-range communication, with the vehicle 20. The UWB module 44 performs UWB communication with the vehicle 20. The NFC module 45 performs NFC communication, which is a type of short-range communication, with the vehicle 20.

The storage device 47 stores key information DK related to the digital keys. The key information DK indicates the digital keys. Further, the key information DK is information allowing a mobile device 40 to be used as the digital key.

The storage device 47 stores various programs for performing digital key processing. The programs stored by the storage device 47 include, for example, a mobile device application and a digital key framework. The mobile device application is an application for storing and deleting the key information DK. The digital key framework is a program using an Application Programming Interface (API) of an operating system (OS) providing the functionalities for pairing a mobile device 40 and allowing it to be used as a digital key. The execution device 46 executes various programs stored in the storage device 47 to perform processes related to the storage and deletion of the key information DK.

The mobile devices 40 include an owner device 40A and shareable devices 40B. In Fig. 1, only one shareable device 40B is shown. The owner device 40A stores owner key information DKO, which indicates that the owner device 40A is an owner key KO, as the key information DK. Only one owner key KO can be registered to each vehicle 20. Thus, there is only one owner key KO for each vehicle 20. The owner key information DKO allows the mobile device 40 to be used as the owner device 40A.

The owner key information DKO includes, for example, vehicle information that identifies the subject vehicle 20, identification information used for management of the digital key, verification information verifying the digital key, public key information of the owner device 40A, and public key information of the vehicle 20. The mobile device 40 designated as the owner device 40A is paired with the vehicle 20 so that the mobile device 40 can store the owner key information DKO in order to function as the owner device 40A.

Each shareable device 40B stores shareable key information DKS, which indicates that the shareable device 40B is a shareable key, as the key information DK. One or more shareable keys which are digital keys, can be registered to each vehicle 20. In other words, there may be more than one shareable key for each vehicle 20.

The shareable key information DKS is information that allows a mobile device 40 to be used as a shareable device 40B. The shareable key information DKS includes, for example, vehicle information that identifies the subject vehicle 20, identification information used for management of the digital key, verification information verifying the digital key, and an authentication package for authenticating registration of the mobile device 40. The authentication package includes signature information, password information, activation time information, expiry time information, and public key information of the shareable device 40B.

A mobile device 40, used as a shareable device 40B stores the shareable key information DKS so that it can be used in a manner similar to the owner device 40A. This allows the mobile device 40 to be used as the shareable device 40B.

In other words, the shareable key is a digital key that can be used in a manner similar to the digital key of the owner device 40A. As long as the owner key KO is registered to the vehicle 20, the shareable key can be used as a digital key allowing usage of the shareable device 40B, which is separate from the owner device 40A.

Registration of the digital keys to the vehicle 20 allows for usage of the digital keys. Thus, in a state in which a digital key is registered, the vehicle 20 stores the authentication information AT, and the mobile device 40 stores the key information DK.

The mobile device server 60 acts to relay communication between the mobile devices 40 and the management server 70. A mobile device server 60 is provided for each type of mobile device 40. In other words, the mobile device server 60 that communicates with a first type of the mobile device 40 differs from a mobile device server 60 that communicates with a second type of the mobile device 40. For example, type refers to a model of the mobile device 40, and a different mobile device server 60 is provided for each model of the mobile device 40. Additionally, type refers to a communication network used by the mobile device 40, and a different mobile device server 60 is provided for each communication network used by the mobile devices 40.

Each mobile device server 60 relays communication to the management server 70. Thus, different types of mobile devices 40 can have communication relayed to the management server 70 by the corresponding mobile device server 60. Fig. 1 shows only one mobile device server 60.

### Management Server

The management server 70 manages the digital keys. The management server 70 is configured to communicate with the vehicle 20 and the mobile devices 40. The management server 70 includes an execution device 71 and a storage device 72. The storage device 72 stores a server program PS, contract information CT, and a database DB. The server program PS has the execution device 71 perform deletion control on the digital keys in the management system 10.

The contract information CT indicates whether or not a contract has been made between the owner of the vehicle 20 and an operator of the digital key services. When the contract is made, the digital keys can be used by the owner of the vehicle 20.

In the database DB, each digital key is associated with a vehicle 20 and a registered mobile device 40. The database DB is organized such that data is organized for each vehicle 20. In a state in which the digital keys are registered, the data stored in the management server 70 indicates information of the mobile devices 40, which store the information DK indicating the digital keys.

### Deletion Control in Management Server

A sequence of processes executed by the management system 10 to perform the deletion control that deletes the digital keys will now be described.

When the management server 70 receives a change request D10, the management system 10 performs a sequence of processes to delete the digital keys. The change request D10 is a request to change the contract information CT from a valid contract state to an invalid contract state. For example, the management server 70 receives the change request D10 when the owner device 40A is operated.

The processes executed by the execution device 27 of the vehicle 20, the execution device 46 of the mobile devices 40, and the execution device 71 of the management server 70 will now be described.

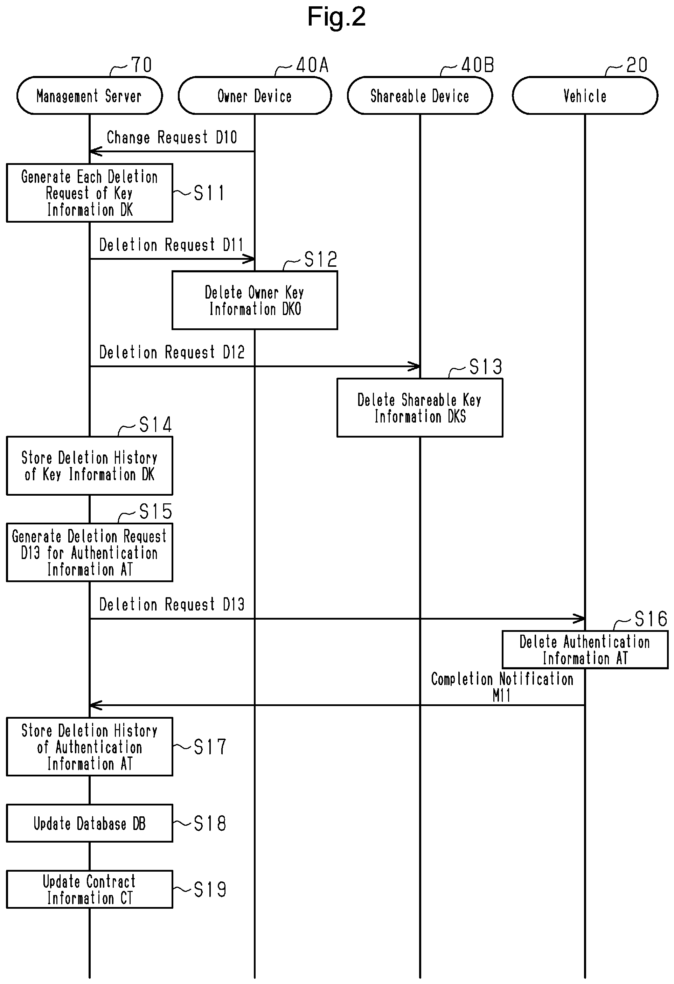

As shown in Fig. 2, the management system 10 performs a sequence of processes to delete the registered digital keys. When the management server 70 receives the change request D10, the management server 70 starts execution of the server program PS. When the management server 70 starts execution of the server program PS, the management server 70 performs step S11.

In step S11, the management server 70 generates a request for deletion of all of the key information DK. The key information DK is information of the digital keys that can be used in accordance with the contract information CT and is the subject of the change request D10.

More specifically, the management server 70 specifies the owner key KO that can be used in accordance with the contract information CT and is indicated in the contract. The management server 70 also specifies the shareable keys that are registered based on a registration request from the owner device 40A, which stores the owner key information DKO indicating the owner key KO. Then, the management server 70 generates deletion requests D11 and D12. The deletion request D11 deletes the specified owner key KO. The deletion request D12 deletes the specified shareable keys.

Subsequently, the management server 70 sends the deletion request D11 to the owner device 40A. When the owner device 40A receives the deletion request D11, the owner device 40A performs step S12.

In step S12, the owner device 40A deletes the owner key information DKO in accordance with the deletion request D11. Thus, the owner device 40A can no longer be used as the owner key KO.

After the management server 70 transmits the deletion request D11, the management server 70 sends the deletion request D12 to the shareable devices 40B. When the shareable devices 40B receive the deletion request D12, the shareable devices 40B each perform step S13.

In step S13, each shareable device 40B deletes the shareable key information DKS in accordance with the deletion request D12. Thus, the shareable device 40B can no longer be used as the shareable key.

After the management server 70 transmits the deletion request D12, the management server 70 proceeds to step S14. In step S14, the management server 70 stores a deletion history of the key information DK in the database DB. Then, the management server 70 proceeds to step S15.

In step S15, the management server 70 generates a deletion request D13 to delete the authentication information AT for authenticating the owner key specified in step S11 and to delete the authentication information AT for authenticating the shareable keys specified in step S11.

Subsequently, the management server 70 sends the deletion request D13 to the vehicle 20. When the vehicle 20 receives the deletion request D13, the vehicle 20 performs step S16.

In step S16, the vehicle 20 deletes the authentication information AT in accordance with the deletion request D13. Thus, the vehicle 20 will no longer be able to authenticate the digital keys.

Afterwards, the vehicle 20 sends a completion notification M11 to the management server 70 indicating that the deletion of the authentication information AT has been completed.

When the management server 70 receives the completion notification M11, the management server 70 performs step S17. In step S17, the management server 70 stores a deletion history of the authentication information AT in the database DB. Then, the management server 70 proceeds to step S18.

In step S18, the management server 70 updates the database DB. More specifically, the management server 70 deletes information of the mobile devices 40, which store the key information DK indicating the digital keys, from the data of the subject vehicle 20. Then, the management server 70 proceeds to step S19.

In step S19, the management server 70 updates the contract information CT to indicate that there is no valid contract. Afterwards, the management server 70 ends the sequence of processes.

In this manner, for the subject of the change request D10, the management system 10 deletes information of the digital keys that can be used only if there is a valid contract. Thus, the management system 10 manages the digital keys, which can be used only when there is a valid contract, of the subject of the change request D10, so that they cannot be used.

### Display Control of Vehicle

The display control for indicating that the storage device 28 in the vehicle 20 is in a state storing the authentication information AT will now be described.

When the communication state of the communication module 21 and the management server 70, which is located at a position remote from the vehicle 20, shifts from a communication-disabled state to a communication-enabled state, the execution device 27 starts execution of the vehicle program PV.

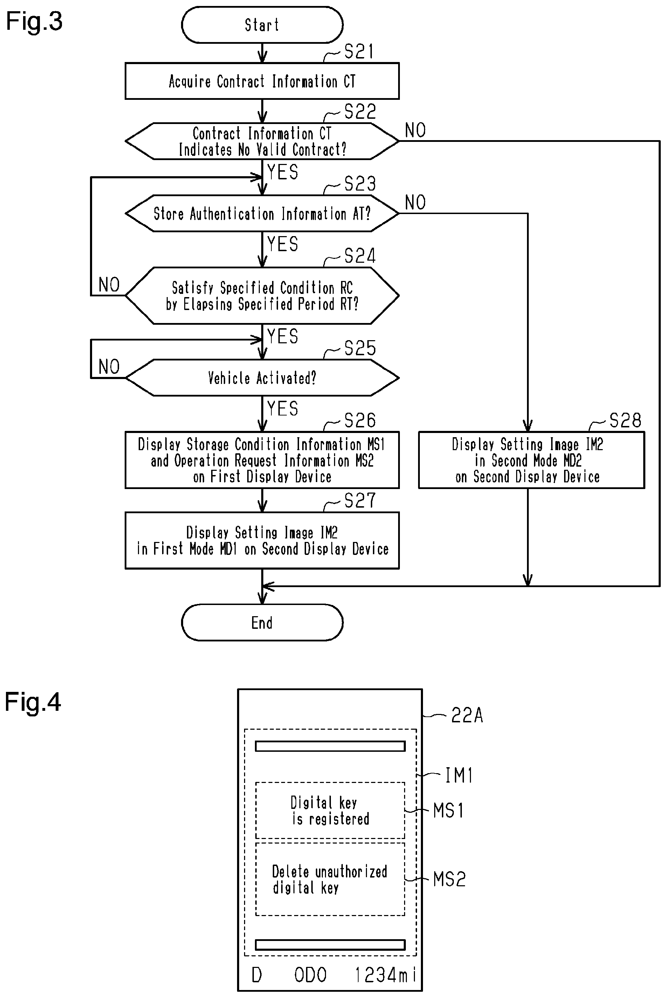

As shown in Fig. 3, when the execution device 27 starts execution of the vehicle program PV, the execution device 27 performs step S21. In step S21, the execution device 27 acquires the contract information CT from the management server 70. The execution device 27 acquires the contract information CT when the communication state with the management server 70 located outside of the vehicle 20 shifts from a communication-disabled state to a communication-enabled state.

More specifically, when the communication state of the communication module 21 is in a communication-enabled state, the communication module 21 acquires the contract information CT from the management server 70 in predetermined cycles. Accordingly, the communication module 21 stores information synchronized with the contract information CT stored in the storage device 72 of the management server 70. When the communication state shifts from a communication-disabled state to a communication-enabled state, the communication module 21 acquires the contract information CT from the management server 70 to synchronize the information stored in the communication module 21 with the latest contract information CT. In this state, the execution device 27 acquires the contact information CT from the communication module 21 to acquire information synchronized with the latest contract information CT stored in the storage device 72 of the management server 70. Afterwards, the execution device 27 proceeds to step S22.

In step S22, the execution device 27 determines whether the acquired contract information CT indicates that there is no valid contract. More specifically, when the acquired contract information CT is not the same as the contract information CT acquired before the communication state shifted to a communication-disabled state, the execution device 27 determines that the acquired contract information CT indicates that there is no valid contract.

In other words, the execution device 27 gives an affirmative determination when the acquired contract information CT does not include the same contract as the contract included in the previously acquired contract information CT. The execution device 27 gives an affirmative determination when the acquired contract information CT does not include any valid contract or when the acquired contract information CT includes a contract that differs from the contract included in the previously acquired contract information CT. When the acquired contract information CT indicates a valid contract (S22:NO), the execution device 27 ends the sequence of processes. In this case, the execution device 27 does not display information indicating that the storage device 28 is storing the authentication information AT.

When the acquired contract information CT indicates that there is no valid contract (S22: YES), the execution device 27 proceeds to step S23. In step S23, the execution device 27 determines whether the authentication information AT is stored in the storage device 28.

When the authentication information AT is stored in the storage device 28 (S23: YES), the execution device 27 proceeds to step S24. In step S24, the execution device 27 determines whether the authentication information stored in the storage device 28 subsequent to acquisition of the contract information CT is in a state satisfying a predetermined specified condition RC. The specified condition RC is satisfied if the period during which the authentication information AT has been stored in the storage device 28 from when the contract information CT was acquired is greater than or equal to a predetermined specified period RT. In other words, in the present embodiment, in step S24, the execution device 27 determines whether the storage device 28 has been storing the authentication information AT after acquiring the contract information CT for a period greater than or equal to the specified period RT. More specifically, the execution device 27 compares the time from when step S21 was completed to the time when S24 was completed with the specified period RT.

If the period during which the storage device 28 has been storing the authentication information AT from when the contract information CT was acquired is not greater than or equal to the specified period RT, the specified condition RC is not satisfied (S24: NO). In this case, the execution device 27 returns to step S23.

If the period during which the storage device 28 has been storing the authentication information AT from when the contract information CT was acquired is greater than or equal to the specified period RT, the specified condition RC is satisfied (S24: YES). In this case, the execution device 27 proceeds to step S25.

In step S25, the execution device 27 determines whether the vehicle 20 is activated. When the vehicle 20 is not activated (S25: NO), the execution device 27 repeats the process of step S25.

When the vehicle 20 is activated (S25: YES), the execution device 27 proceeds to step S26. In step S26, the execution device 27 displays storage state information MS1 and operation request information MS2 on the first display device 22A. The storage state information MS1 indicates a state in which the authentication information AT is stored. The operation request information MS2 prompts an operation for deleting the authentication information AT to be performed.

More specifically, as shown in Fig. 4, the execution device 27 displays a warning image IM1 on the screen of the first display device 22A. The warning image IM1 includes an image that displays the storage state information MS1 and an image that displays the operation request information MS2 on the screen. The storage state information MS1 indicates a text image of "Digital key is registered". The operation request information MS2 indicates a text image of "Delete unauthorized digital key".

As shown in Fig. 3, in this manner, on the condition that the acquired contract information CT does not indicate a valid contract and the state of the storage device 28 storing the authentication information AT satisfies the specified condition RC, the execution device 27 displays the warning image IM1 on the first display device 22A. Then, the execution device 27 proceeds to step S27.

In step S27, the execution device 27 displays a setting image IM2 which is an image related to the setting of the digital key, on the second display device 22B in the first mode MD1.

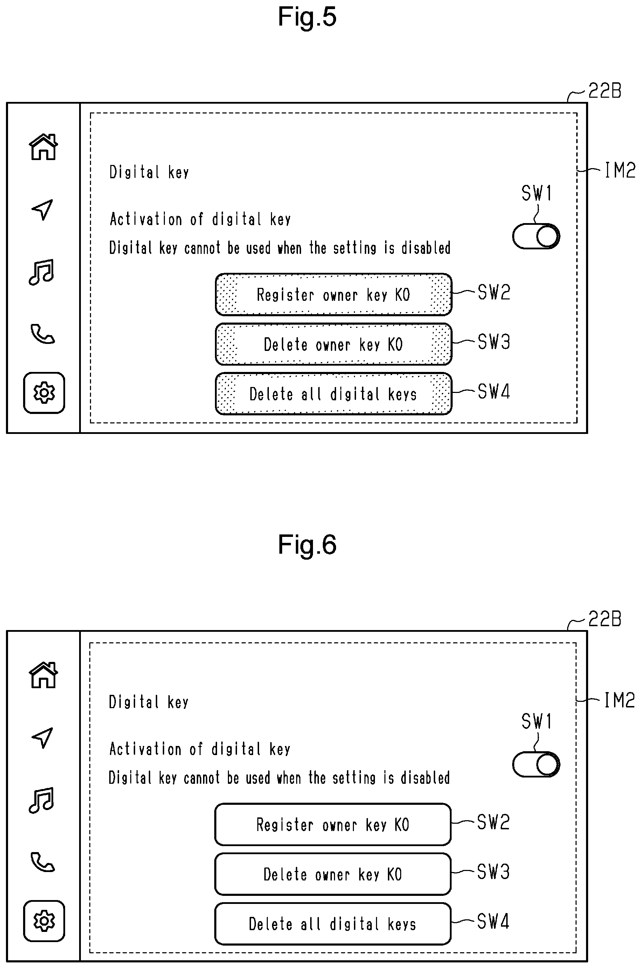

More specifically, as shown in Fig. 5, the execution device 27 displays the setting image IM2 on the second display device 22B in the first mode MD1. The setting image IM2 includes a toggle switch SW1, a registration switch SW2, a partial deletion switch SW3, and a full deletion switch SW4.

The toggle switch SW1 validates and invalidates the digital key. The registration switch SW2 is for registering a new owner key KO. Thus, when the registration switch SW2 is operated, the execution device 27 deletes the stored authentication information AT and performs a sequence of processes for storing new authentication information AT to authenticate a new owner key KO.

The partial deletion switch SW3 deletes the owner key KO, which is authenticated by the stored authentication information AT. When the partial deletion switch SW3 is operated, the execution device 27 performs processes for deleting the authentication information AT, which is used to authenticate the owner key KO from the stored authentication information AT.

The full deletion switch SW4 deletes every one of the digital keys that are authenticated by the stored authentication information AT. When the full deletion switch SW4 is operated, the execution device 27 performs processes for deleting all of the stored authentication information AT. Thus, when the complete deletion switch SW4 is operated, the authentication information AT that authenticates the owner key KO and the authentication information AT that authenticates the sub keys are deleted.

Further, in the setting image IM2 of the first mode MD1, the toggle switch SW1, the registration switch SW2, the partial deletion switch SW3, and the full deletion switch SW4 are all displayed on the screen in an operable manner. Thus, the setting image IM2 shows items related to the digital keys and is used to delete the authentication information AT from the storage device 28. When the setting image IM2 is displayed in the first mode MD1, an operation for deleting the authentication information AT can be performed. After the setting image IM2 in a first mode MD1 is displayed on the second display device 22B for a predetermined time, the execution device 27 ends the sequence of processes.

As shown in Fig. 3, when the storage device 28 stores no authentication information AT (S23: NO), the execution device 27 proceeds to step S28. In step S28, the execution device 27 displays the setting image IM2 in a second mode MD2 on the second display device 22B.

More specifically, as shown in Fig. 6, the execution device 27 displays the setting image IM2 in the second mode MD2 on the screen of the second display device 22B. The second mode MD2 is a mode differing from the first mode MD1. In the second mode MD2, the toggle switch SW1 is operable. However, the registration switch SW2, the partial deletion switch SW, and the full deletion switch SW4 are displayed in an inoperable manner. Thus, in the second mode MD2, in a state in which the setting image IM2 is displayed, the authentication information AT cannot be deleted.

Further, as shown in Fig. 3, when the storage device 28 stores no authentication information AT (S23: NO), the execution device 27 does not display the warning image IM1 on the first display device 22A. After the execution device 27 displays the setting image IM2 in the second mode MD2 on the second display device 22B for a predetermined time, the execution device 27 ends the sequence of processes. In this manner, the execution device 27 implements the display control by executing the vehicle program PV.

### Operation of Present Embodiment

In the present embodiment, the management system 10 performs deletion control if the contract information CT changes from a state indicating a valid contract to a state indicating no valid contract when the communication state of the communication module 21 and the management server 70 is in a communication-enabled state. This deletes the authentication information AT from the storage device 28.

If the contract information CT changes from a state indicating a valid contract to a state indicating no valid contract when the communication state of the communication module 21 and the management server 70 is in a communication-disabled state, the vehicle 20 cannot receive the deletion request D13 even if the management system 10 performs the deletion control. Thus, the storage device 28 remains in a state storing the authentication information AT.

In this case, when the communication state of the communication module 21 and the management server 70 shifts from a communication-disabled state to a communication-enabled state, the execution device 27 starts the display control. The contract information CT acquired during the display control indicates that there is no valid contract. Afterwards, when the execution device 27 gives affirmative determinations in steps S23 to S25, the storage state information MS1 and the operation request information MS2 are displayed on the first display device 22A.

### Advantages of Present Embodiment

(1) After the contract becomes invalid, the digital key ECU 26, which is an in-vehicle device, displays the storage state information MS1 on the first display device 22A. This allows the user of the vehicle 20 to acknowledge that the authentication information AT is stored in the vehicle 20.
(2) In the display control, the execution device 27 displays the storage state information MS1 and the operation request information MS2 on the first display device 22A. This structure prompts the user of the vehicle 20 who looks at the first display device 22A to delete the authentication information AT from the storage device 28. As a result, the digital key ECU 26 will not continue to store the authentication information AT for authenticating the digital keys that were useable under the terminated contract.
(3) In the display control, if the acquired contract information CT does not indicate a valid contract and the storage state of the authentication information AT satisfies the predetermined specified condition RC, the execution device 27 displays the warning image IM1 on the first display device 22A.
   With this structure, the specified condition RC has to be satisfied for the warning image IM1 to be displayed on the first display device 22A. Thus, when the specified condition RC is not satisfied, the warning image IM1 does not need to be displayed on the first display device 22A.
(4) The specified condition RC is a state in which the authentication information AT is stored in the storage device 28, from when the contract information CT was acquired has been continuing over a period greater than or equal to the predetermined specified period RT. With this structure, if a state in which the authentication information AT is stored in the storage device 28 from when the contract information CT was acquired is greater than or equal to the specified period RT, the warning image IM1 is displayed on the first display device 22A. Thus, if the authentication information AT is deleted from the storage device 28 after the contract information CT is acquired and before the specified period RT lapses, the warning image IM1 does not need to be displayed on the first display device 22A.
(5) In the display control, the execution device 27 displays the setting image IM2 on the second display device 22B of the vehicle 20. When the storage device 28 stores the authentication information AT, the execution device 27 displays the setting image IM2 in the first mode MD1. When the storage device 28 does not store the authentication information AT, the execution device 27 displays the setting image IM2 in the second mode MD2, which differs from the first mode MD1. Thus, when the user of the vehicle 20 looks at the setting image IM2, the user can recognize whether the authentication information AT is stored in the storage device 28 from the difference in the modes.
(6) The setting image IM2 in the first mode MD1 allows for deletion of the authentication information AT. The setting image IM2 in the second mode MD2 cannot be used to delete the authentication information AT. Thus, if the authentication information AT is stored in the storage device 28 when the setting image IM2 is displayed, the user of the vehicle 20 can perform an operation for deleting the authentication information AT. When the authentication information AT is not stored in the storage device 28 and the setting image IM2 is displayed, even if the user of the vehicle 20 inadvertently attempts to delete the authentication information AT, the authentication information AT cannot be deleted.

### Modifications

The above embodiments may be modified as described below. The above embodiments and the following modifications may be combined as long as the combined modifications remain technically consistent with each other.

The vehicle 20 does not need to include all of the BLE module 23, the UWB module 24, and the NFC module 25. The vehicle 20 can perform short-range wireless communication with the mobile devices 40 as long as it includes at least one of these modules. Further, the vehicle 20 is not limited to the described modules and can include different modules as long as short-range wireless communication can be performed.

Items related to the digital keys in the above embodiment do not need to comply with the CCC standard.

The sequence of processes for deleting the registered digital key performed by the management system 10 is not limited to the example of the above embodiment. For example, the management server 70 may send the deletion request D13 to the vehicle 20 before sending the deletion requests D11 and D12 to the owner device 40A and the shareable device 40B. Further, the management server 70 may send the deletion requests D11 and D12 to the owner device 40A and the shareable device 40B after receiving the completion notification M11 and performing step S17. Accordingly, the management system 10 may first delete the authentication information AT and then delete the key information DK.

The in-vehicle device is not limited to the digital key ECU 26. For example, the in-vehicle device may be a central ECU that coordinates and manages a plurality of ECUs included in the vehicle 20. Further, the in-vehicle device may be an ECU that includes the digital key ECU 26 and the proximity key ECU 33.

The digital key ECU 26 may be configured by processing circuitry that includes one or more processors executing various processes in accordance with a computer program (software). Further, the digital key ECU 26 may include one or more dedicated hardware circuits such as an application-specific integrated circuit (ASICs), that executes at least some of the various processes or circuitry including a combination of such hardware circuits. The processor includes a CPU and memories such as a RAM and a ROM. The memory stores program codes and instructions configured to have the CPU to execute a process. The memory, which is a non-transitory computer-readable medium, includes any medium that can be accessed by a general-purpose computer or special-purpose computer. The program may be stored in a CD-ROM or a non-transitory data storage medium that is computer-readable and may be distributed as a program product. The program may be provided by an information provider connected to a network such as the internet as a downloadable program product. In this regard, in the same manner, the proximity key ECU 33, the mobile devices 40, and the management server 70 may be distributed as program products.

As described in the above embodiment, the shareable device 40B includes a functionality for receiving a shareable key. A mobile device 40 that has the functionality for receiving a digital key in a manner similar to the shareable device 40B is defined as a receiving device.

The mobile device server 60 does not need to be provided for each type of the mobile device 40. The mobile devices 40 and the management server 70 are at least capable of performing wireless communication. The mobile device server 60 may be omitted. The mobile devices 40 are at least capable of performing wireless communication directly with the management server 70.

The management server 70 may include a plurality of servers. For example, the management server 70 may include a server that stores the database DB and a server that executes the server program PS. Additionally, for example, the management server 70 may include a server that communicates with the vehicle 20 and a server that communicates with the mobile device server 60. In this case, these servers are configured to communicate with each other.

The management server 70 does not need to store the database DB. For example, for each digital key, the management server 70 may manage the combination of the key information DK of the mobile device 40 and the authentication information AT of the digital key ECU 26. As another option, for example, the management server 70 may store only the contract information CT.

### Various Types of Information

As long as the authentication information AT is for authenticating a digital key when the digital key is used, the authentication information AT is not limited to the examples described in the above embodiment. For example, the authentication information AT may be a symmetric key shared by the digital key ECU 26 and the mobile device 40. Additionally, for example, the authentication information AT may be a shared secret key.

The configuration of the information in the key information DK is not limited to the examples of the above embodiment. For example, the owner key information DKO may include information that indicates the type of the digital key. The type of the digital key is, for example, information indicating either one of the owner key KO or the shareable key.

Information related to the digital key that is stored in the digital key ECU 26 is not limited to the authentication information AT and may be any information related to the digital key. For example, information related to the digital key may be for identifying the digital key.

Information related to the digital key that is stored in the mobile devices 40 is not limited to the key information DK and may be any information related to the digital key. For example, the information related to the digital key may be for identifying the digital key.

Information related to the digital key that is stored in the digital key ECU 26 may be the same as or differ from the information related to the digital key stored in the mobile devices 40 in the above embodiment.

### Display Control

The execution device 27 may execute the display control in predetermined cycles even if the communication state is in a communication-enabled state. Accordingly, when the communication state is in a communication-enabled state and the contract information CT does not indicate a valid contract, the execution device 27 may display the warning image IM1. In this case, if the communication state of the execution device 27 and the management server 70 is in a communication-enabled state, the execution device 27 does not need to delete the authentication information AT when the execution device 27 receives the deletion request D13 from the management server 70.

The time at which the execution device 27 acquires the contract information CT is not limited to the example described in the above embodiment. For example, the execution device 27 may acquire the contract information CT in predetermined cycles when the communication state is in a communication-enabled state.

The specified condition RC does not need to be in the state in which the authentication information AT is stored in the storage device 28 from when the contract information CT is acquired continues for a time greater than or equal to the specified time RT. For example, the specified condition RC may be that the proximity key 52 or the card key 51, which is a key differing from the digital keys, is successfully authenticated. In this case, since the key differing from the digital keys is successfully authenticated, even if the authentication information AT is deleted as a result of prompting the user to delete the authentication information AT, the digital key ECU 26 avoids a situation in which continuous use of the vehicle 20 is hindered.

The execution device 27 may display the warning image IM1 and the setting image IM2 regardless of whether the specified condition RC is satisfied. In this case, the execution device 27 may omit step S24. Thus, for example, the execution device 27 may display the warning image IM1 even if the specified condition RC is not satisfied.

The execution device 27 may omit step S25. Further, instead of step S25, the execution device 27 may determine whether the vehicle 20 has stopped. If the vehicle 20 stops, the execution device 27 may proceed to step S26. In this case, as the vehicle 20 travels and the communication state shifts from a communication-disabled state to a communication-enabled state, the user of the vehicle 20 is presented with the warning image IM1 and the setting image IM2 when it is safe for the user to view the display. Furthermore, for example, instead of step S25, the execution device 27 may determine whether the vehicle 20 is deactivated.

In the display control, the execution device 27 does not need to display the operation request information MS2 in the warning image IM1. In the display control, the execution device 27 may at least display the storage state information MS1.

The setting operation related to the digital key in a state in which the setting image IM2 is displayed, the deletion of the authentication information AT does not need to be included. For example, the setting image IM2 may be an image including only the toggle switch SW1.

The execution device 27 does not need to display the setting related to the digital key in an operable manner in a state in which the setting image IM2 of the first mode MD1 is displayed. Further, the execution device 27 does not need to display the setting related to the digital key in an inoperable manner in a state in which the setting image IM2 of the second mode MD2 is displayed.

The differences between the setting images IM2 of the first mode MD1 and the second mode MD2 are not limited to the examples in the above embodiment. For example, the first mode MD1 and the second mode MD2 may have different layouts for the switches, different colors for the text images, and different color intensities for the switches. Further, for example, although in the first mode MD1, four switches are displayed, the second mode MD2 may display only the toggle switch SW1.

The first mode MD1 and the second mode MD2 displayed by the execution device 27 may be the same mode.

A condition for having the execution device 27 display the setting image IM2 may be that the predetermined operation for displaying the setting image IM2 has been performed. An example of the predetermined operation may be that the operation of a predetermined switch on the second display device 22B. More specifically, after step S26 and before step S27, the execution device 27 may determine whether the predetermined switch has been operated. If the switch has not been operated, the execution device 27 may repeat the determining process. In this manner, the time at which the execution device 27 displays the setting image IM2 may differ from the time at which the execution device 27 displays the warning image IM1.

The execution device 27 may display the setting image IM2 on the first display device 22A. Further, the execution device 27 may display the warning image IM1 on the second display device 22B. In these cases, two images may be displayed on the same display device.

The execution device 27 may omit step S28. Further, the execution device 27 may omit step S27. In other words, in the display control, the execution device 27 does not need to display the setting image IM2.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An in-vehicle device (26), comprising:
a storage device (28); and
processing circuitry (27), wherein
the storage device (28) stores information related to a digital key of a vehicle (20), and
the processing circuitry (27) is configured to execute display control including:
acquiring contract information from outside the vehicle (20), in which the contract information indicates whether there is a valid contract allowing the digital key to be used, and
if the acquired contract information indicates that the valid contract does not exist, displaying, on a display portion of the vehicle (20), information indicating that the information related to the digital key is stored in the storage device (28).

2. The in-vehicle device (26) according to claim 1, wherein the processing circuitry (27) is configured to execute the display control to display, on the display portion, the information indicating that the information related to the digital key is stored in the storage device (28) and information that prompts an operation for deleting the information related to the digital key to be performed.

3. The in-vehicle device (26) according to claim 1 or 2, wherein if the acquired contract information indicates that the valid contract does not exist and a state in which the information related to the digital key is stored in the storage device (28) from when the contract information is acquired satisfies a predetermined specified condition, the processing circuitry (27) is configured to execute the display control to display, on the display portion, the information indicating that the information related to the digital key is stored in the storage device (28).

4. The in-vehicle device (26) according to claim 3, wherein the specified condition is that the state in which the information related to the digital key is stored in the storage device (28) from when the contract information is acquired has been continuing for a period greater than or equal to a predetermined specified period.

5. The in-vehicle device (26) according to any one of claims 1 to 4, wherein the processing circuitry (27) in the display control is configured to:
display a setting image on the display portion to perform settings related to the digital key,
display the setting image in a first mode when the information related to the digital key is stored in the storage device (28), and
display the setting image in a second mode differing from the first mode when the information related to the digital key is not stored in the storage device (28).

6. The in-vehicle device (26) according to claim 5, wherein
a state in which the setting image is displayed in the first mode allows an operation for deleting the information related to the digital key to be performed, and
a state in which the setting image is displayed in the second mode does not allow the operation for deleting the information related to the digital key to be performed.

7. A method executed by an in-vehicle device (26) that stores information related to a digital key of a vehicle (20), the method comprising:
acquiring, with the in-vehicle device (26), contract information indicating whether a valid contract allowing the digital key to be used exists from outside the vehicle (20); and
if the acquired contract information indicates that the valid contract does not exist, displaying information on a display portion of the vehicle (20) to indicate that the information related to the digital key is stored in the in-vehicle device (26).

8. A program executed by an in-vehicle device (26) storing information related to a digital key of a vehicle (20), wherein when the program is executed by the in-vehicle device (26), the program causes the in-vehicle device (26) to perform operations comprising:
acquiring contract information, from outside the vehicle (20), indicating whether there is a valid contract allowing the digital key to be used, and
displaying, if the acquired contract information indicates that the valid contract does not exist, information on a display portion of the vehicle (20) indicating that the information related to the digital key is stored in the in-vehicle device (26).
